(19)

**Europäisches Patentamt**

**European Patent Office**

**Office européen des brevets**

(11) **EP 3 185 554 A1**

(12) **EUROPEAN PATENT APPLICATION**

(43) Date of publication:
**28.06.2017 Bulletin 2017/26**

(21) Application number: **15307068.5**

(22) Date of filing: **21.12.2015**

(51) Int Cl.:
**H04N 19/124** *(2014.01)*          **H04N 19/14** *(2014.01)*
**H04N 19/18** *(2014.01)*           **H04N 19/63** *(2014.01)*
**H04N 19/37** *(2014.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ALCATEL LUCENT**
**92100 Boulogne-Billancourt (FR)**

(72) Inventors:
• **LIEVENS, Sammy**
**2018 Antwerpen (BE)**

• **TYTGAT, Donny**
**2018 Antwerp (BE)**
• **AERTS, Maarten**
**2018 Antwerpen (BE)**
• **MACQ, Jean-François**
**2018 Antwerpen (BE)**
• **RONDAO ALFACE, Patrice**
**2018 Antwerpen (BE)**
• **STEVENS, Christoph**
**2018 Antwerpen (BE)**

(74) Representative: **ALU Antw Patent Attorneys**
**Intellectual Property and Standards**
**Copernicuslaan 50**
**2018 Antwerp (BE)**

(54) **DEVICES FOR VIDEO ENCODING AND RECONSTRUCTION WITH ADAPTIVE QUANTIZATION**

(57)      A transmitter for generating a set of encoded prioritized video streams from an incoming video stream (Vin) comprises :

- a video decomposition module (VD) for decomposing said incoming video stream in at least two independent video components in spectral or time-spatial/spectral domain (Vd1,...,Vdn),
- a compression module for compressing said at least two independent video components, thereby obtaining at least two compressed independent video components (Vde1,...,Vden),
- a multi-stream packetization and prioritization module (MPP) for generating for each of said at least two compressed independent video components a respective set of packet streams in respective different qualities Vde1q1,..,Vde1ql,...,Vdenq1,...,Vdenql),

- a transmission rule engine (TRE) for determining and provision of respective compression parameters (prc) to be applied to the respective independent video components in said compression module , and for determining and provision of respective priority parameters (Pr) to said multi-stream packetization and prioritization module.

A receiver for requesting at least two compressed independent video components, each of them in a respective requested quality (Vdeq1,Vdnqi), from such a transmitter (T) is disclosed as well.

Fig. 1c

## Description

The present invention relates to devices and a method for video encoding and reconstruction.

In present video transmission systems content providers don't always have a clear view of the network conditions the transmitted multimedia content will undergo between sender and receiver. However most content providers do know which part of the content is to be provided in high quality and which part is not that important. This may for instance be the case for some movie scenes where the main personages can be much more important compared to the landscape in background. However for other scenes of this same movie, it may be exactly the opposite. For a high quality transmission of often varying important parts, whereby also network conditions may change too, no good solutions are presently available.

Existing scalable video coding methods, hereafter abbreviated with SVC, encode the complete video into one base quality layer and one or multiple quality enhancement layers whereby each next encoded layer depends and improves upon the quality of the previous layer. This solution may take into account varying network conditions and/or varying user preferences/devices, e.g. by having the number of enhancement layers transmitted dependent upon the quality of the link between sender and receiver. This may guarantee at least a minimum base quality layer reaching the end-client under worst case network conditions. However even in such situations the content provider has no real control to guarantee that the most important content part, thus possibly varying objects from the video, will reach the client with a certain level of guarantee. This is because in SVC the base layer makes abstraction of the video contents and thus provides the complete video at a minimum guaranteed quality, which, for some scenes, may not be sufficient.

Another existing encoding method used for transmitting panoramic interactive video , tiles the video frames into independent sub-frames, denoted video tiles. These tiles are independently encoded and sent at different qualities or resolutions in order to enable interactive zooming in the video content while maintaining the overall resolution received by the end-device. However this approach suffers from the disadvantage to consume much more bandwidth compared to traditional encoding schemes in view of the bad compression efficiency.

It is thus an object of the invention to provide improved encoding schemes which are at the same time compression efficient and versatile, thus allowing to adapt to different network conditions.

This object is achieved by means of an embodiment of a transmitter for generating a set of encoded prioritized video streams from an incoming video stream, said transmitter comprising :

- a video decomposition module for decomposing said incoming video stream in at least two independent video components in spectral or time-spatial/spectral domain,
- a compression module for compressing said at least two independent video components, thereby obtaining at least two compressed independent video components,
- a multi-stream packetization and prioritization module for generating for each of said at least two compressed independent video components a respective set of packet streams in respective different qualities,
- a transmission rule engine for determining and provision of respective compression parameters) to be applied to the respective independent video components in said compression module , and for determining and provision of respective priority parameters to said multi-stream packetization and prioritization module.

In this way prioritization can be given on two different levels, a first level at the compression stage, a second level at the transport stage.

In an embodiment said video decomposition module comprises a filter bank of N analysis filters , for performing respective filtering operations on said incoming video stream, thereby obtaining a set of N independent video components.

In another embodiment said video decomposition module is adapted to perform a fast Fourier transform operation on said incoming video stream, followed by at least two low pass filtering operations in the respective frame directions.

In yet another embodiment said video decomposition module is adapted to perform a wavelet transform operation on said incoming video stream.

These three different embodiments for performing the decomposition of the incoming video signal all result in a set of independent decomposed video components. The filter bank and fast-Fourier transform embodiments result in a set of independent spectral components, the wavelet embodiment results in a set of independent time-spatial/spectral components.

According to another aspect said transmission rule engine is adapted to determine said compression parameters and said respective priority parameters, based on knowledge of said decomposition process and on the contents of said incoming video stream.

This allows to better prioritize the more important parts based on the contents themselves.

In yet another embodiment said transmission rule engine is further adapted to receive said at least two independent video components from said video decomposition module, to analyze said at least two independent video components and to further determine said compression parameters and said respective priority parameters based on said analysis.

This further enhances the accuracy for attributing priorities based on the video component contents themselves.

In an embodiment said compression parameter is a quantization parameter.

To enable good recovery at the receiver coupled to embodiments of the transmitter, the transmitter is adapted to send a signaling message to a receiver coupled to said transmitter, said signaling message containing information about said decomposition used by said transmitter and the respective qualities in which said respective set of packet streams are generated.

The present invention relates as well to embodiments of a receiver adapted to request at least two compressed independent video components, each of them in a respective requested quality, from a transmitter, said receiver further being adapted to

- de-packetize said at least two compressed independent components, thereby obtaining at least two received compressed independent components,
- decompress said at least two received compressed independent components, thereby obtaining at least two received independent components,
- reconstruct said video stream from said at least two received independent components by performing a re-composition operation on said at least two received independent components.

In an embodiment said re-composition operation comprises performing a set of synthesis filter operations.

In another embodiment said re-composition operation comprises performing an inverse Fourier transform operation.

In yet another embodiment said re-composition operation comprises performing an inverse wavelet transform operation.

These three respective embodiments of a re-composition module at the receiver allow to reconstruct encoded signals received from respective transmitter embodiments performing an associated respective de-composition.

To further enable the correct reconstruction of the video signal embodiments of the receiver are adapted to receive from said transmitter a signaling message informing said receiver on a video decomposition operation performed in said transmitter, such that said receiver is adapted to perform an inverse re-composition operation.

The present invention relates as well to embodiments of methods performed in the transmitter/receiver and in between both of them, e.g. via the signaling signals between both of them, as well as to embodiments of computer programs for performing these methods.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein:

Figs 1a-c schematically show high level embodiments of a transmitter and receiver coupled to each other via a communications network, wherein a network filtering unit is present,

Figs 2a-b show examples of the amplitude of normalized Fourier spectra for normalized spatial frequencies fx, fy for two types of video content where fy=0 and fx≥0, as well as examples for respective attributed weights,

Fig. 3a shows an implementation of the video decomposition module VD of the transmitter based on filter banks, and associated video re-composition module VR in the receiver,

Figs. 3b-c show another implementation of module VD based on the Fourier Transform, and associated implementation of the video re-composition module VR in the receiver,

Figs. 4a-b show another implementation of video de-composition module in the transmitter, based on wavelet transforms, and associated video re-composition module in the receiver,

Fig. 5 illustrates the wavelet decomposition implementation on a real picture.

It is to be remarked that the following merely illustrates the principles of the invention. It will thus be appreciated that those skilled in the art will be able to devise various arrangements that, although not explicitly described or shown herein, embody the principles of the invention. Furthermore, all examples and conditional language recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

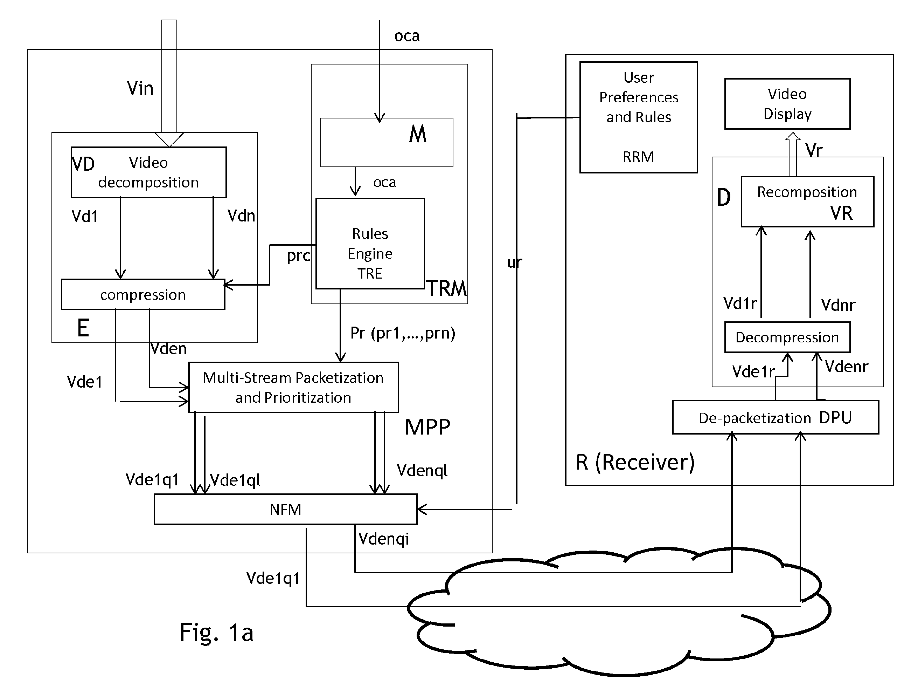

Fig. 1a depicts a high-level implementation of a transmitter T, coupled via a network, depicted by a cloud, to a receiver R.

Transmitter T contains an input which is adapted to receive a video file Vin. This video can be temporarily stored within T before being forwarded to a video encoding apparatus E of T. In the embodiments depicted in Figs. 1a-c the video file is directly provided to a video decomposition module VD of the encoder E.

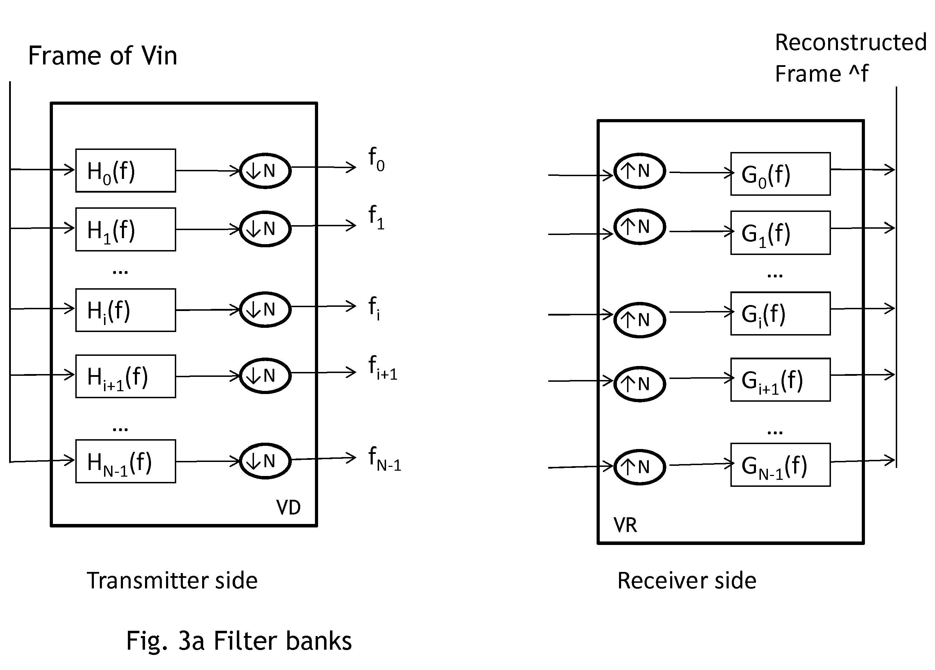

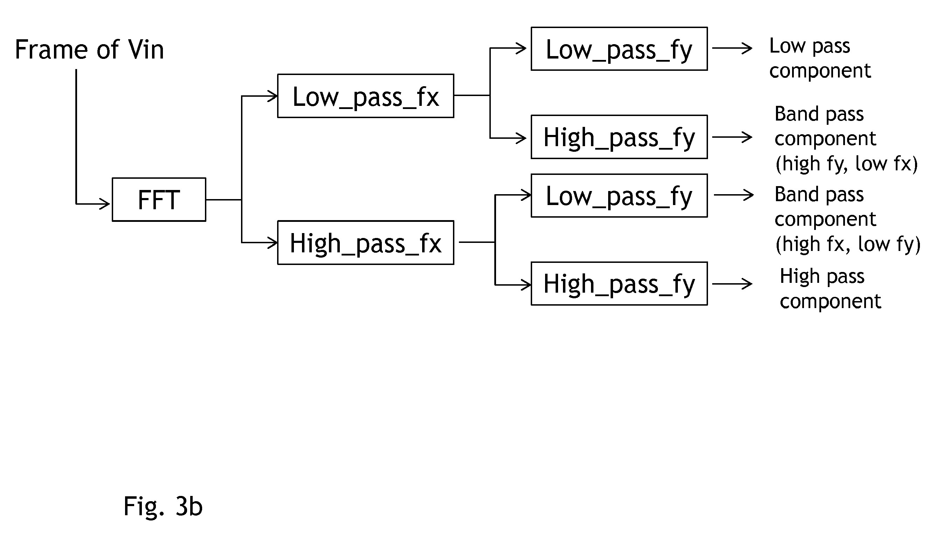

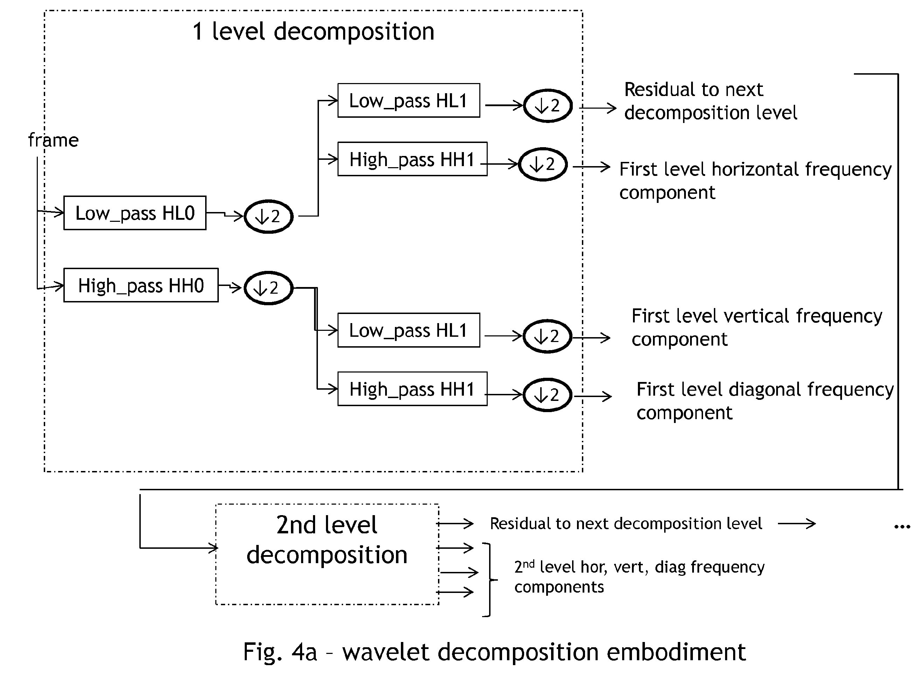

This video decomposition module is adapted to perform a first decomposition of the video signal into components in the spectral or time/spatial-spectrum domain. For embodiments where this decomposition takes place in the spectral domain, such as the one shown in fig. 3a, e.g. a filter bank can be applied on the incoming video Vin, or, for an embodiment such as the one shown in fig. 3b, e.g. a block-based Fourier transform showing an example of partitioning at frequency level through low and high pass filters, can be performed on the incoming video Vin. These will be further explained in a next paragraph. In another embodiment this decomposition takes place in the time/spatial-spectrum domain, whereby VD is adapted to perform a Wavelet transform on the incoming video Vin. This will also be further described in another paragraph, describing the embodiments of Fig. 4a.

For a (block-based )(discrete)(fast) Fourier transform embodiment, the input video frames are first decomposed into their 2D spectra or their 3D spectra using both temporal and 2D spatial Fourier transform , in two directions , the horizontal and the vertical direction. This can be performed by the use of fast Fourier transform, abbreviated by FFT ,or 3D-FFT on each color channel (for example RGB, YUV, LAB, HSV or other color spaces), respectively. Furthermore, the FFT can be applied on the whole frame or on blocks of pixels for each frame, but also on different tiles of the frame at different resolutions in order to introduce spatial locality to the transform. The latter tiling is not shown in Figs. 1a-c, nor in Fig. 3a nor Fig. 3b, and can be considered as a kind of preprocessing taking place before the actual video decomposition.

Fig. 3a shows an extra down-sampling step with a factor of N at the transmitter, and an associated up-sampling with the same factor at the receiver. However this is optional in other embodiments.

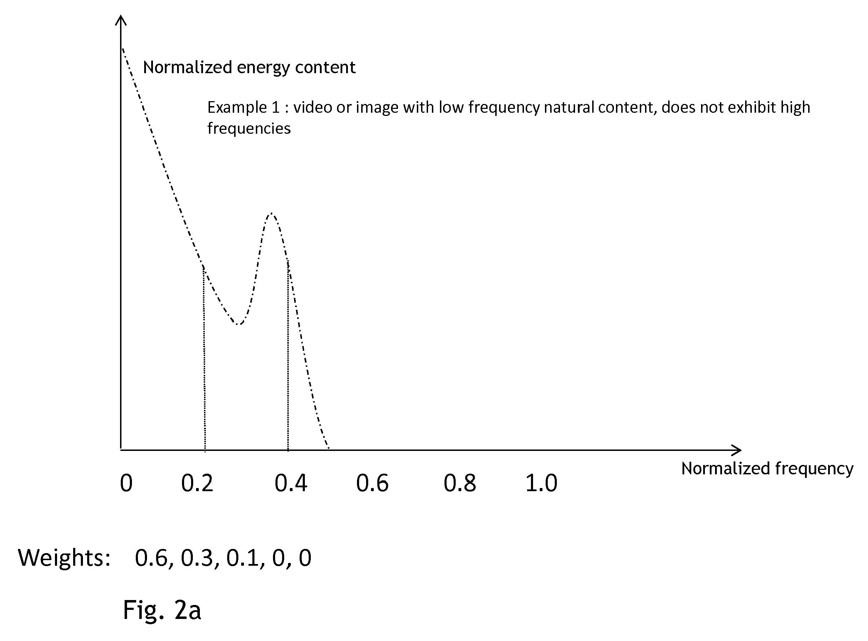

The values of such spectra may be complex and typically in floating point precision. The advantage of spectral decomposition for natural video signals (that is excepting parasites and white noise signals) is that most of the signal energy is compacted into the spectral low frequencies, while signal energy quickly decreases when frequency increases, as is shown in Fig. 2a. It is to be noted that Figs 2a-b only show exemplary spectra taken over one direction, e.g. the horizontal direction.

Another aspect of the Fourier transform of real video signals is that their spectrum has well-known symmetry properties, which make it a robust representation.

The output of this video decomposition module is denoted Vd1...Vdn, in Fig. 1a, and thus comprises a number n of decomposed video files Vd1 to Vdn. The decomposition results in n components where the redundancy is reduced, which can be considered as independent from each other.

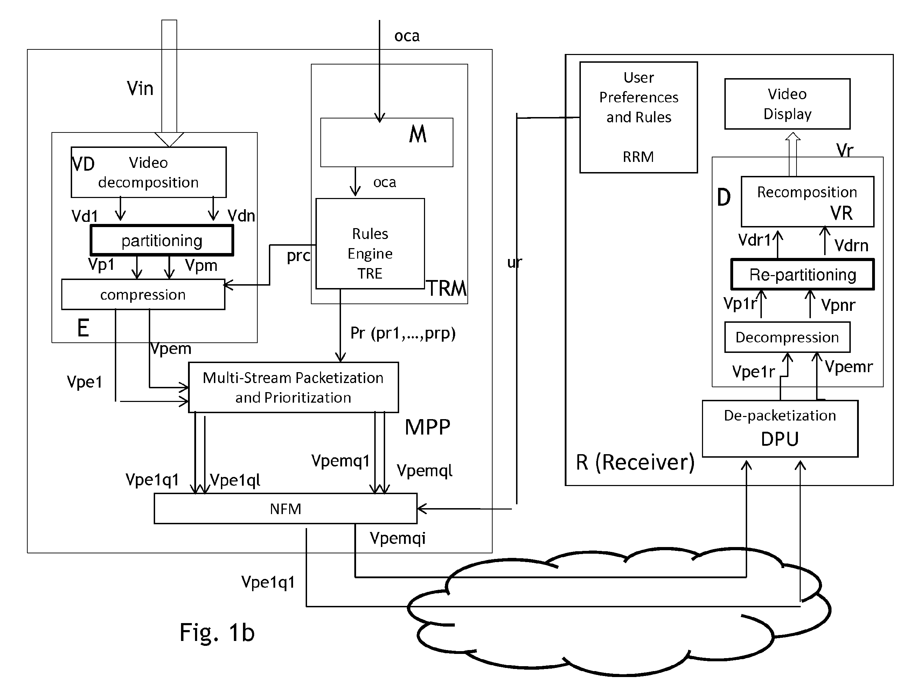

Global 2D (or 3D) multi-scale block 2D (or 3D) spectra can then be optionally partitioned into different components, which is typically performed to create components that contain specific percentages of the spectral energy of the local video signal. This partitioning is shown in Fig. 1b.

Spectral components can be encoded with a traditional coding algorithm, such as for example H264, with a preliminary normalization and quantization of the spectral coefficients amplitude and phase.

The separate components Vd1 to Vdn produced by the decomposition module may be compressed separately at different qualities or adapted domain resolutions, this difference in compression being controlled by a signal prc. This control signal prc may comprise a set of control parameters, e.g. a quantization parameters per decomposed video, which can individually influence the encoding, if needed. In some embodiments only two out of the n are differently encoded, in other embodiments all n are differently encoded, and all possible embodiments in between are as well possible.

This control signal prc is generated and provided to the encoder E by a transmitter rule module TRM for influencing the compression. This control signal is denoted prc on Fig. 1a.

In the embodiment depicted in Fig. 1a TRM comprises a memory M for receiving some input parameters which can be stored before further being provided to a rules engine module TRE of TRM. These input parameters are denoted oca and are already in association to the decomposition process which e.g. an operator is knowledgeable about , and as such already indicate the relative importance of each decomposed result, taking into account a knowledge of the video content itself.

Priorities are determined by TRM for influencing prc. For a spectral decomposition these priorities are determined for the different frequency components, thus calculated or attributed for the different spectral components based on their frequency range. DC component and low frequencies receive the highest priority, as they generally also have the highest energy. In general frequency bands are prioritized based on the energy they contain. This energy distribution is however content dependent : in presence of edges in only one given direction , the spectrum amplitude in that spatial frequency direction is known to be higher than in the other directions. It follows, that priorities follow the relative importance of the spectral component with respect to the other components in the quality of the reconstruction.

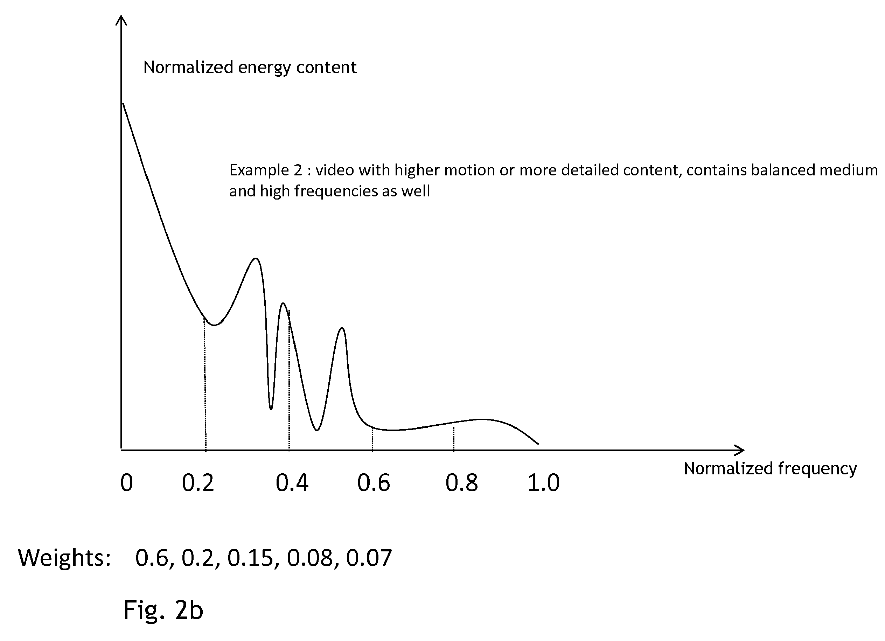

This is further illustrated in Figs. 2a-b, showing the normalized relative amplitudes of the normalized Fourier transform spectral components, for a video with contents of nature, landscapes (Fig.2a), and a video comprising much more action and motion (Fig2b ). It is clear that in a video comprising natural images, relatively more energy is present in the low frequency components, as reflected by the higher amplitudes , which low frequency components thus contain most of the luminance information.

An operator or another person with knowledge of the video contents, can therefore already attribute a default higher weight to these lower frequencies, based on a presumed spectrum. Some examples of weights are shown at the bottom in fig. 2a. On the other hand in some videos higher directional frequencies are important e.g. to represent contours or edges, sharper details or motion. So for this type of content, of which the sender is aware, more relative importance is given by default weight parameters to these frequencies, as can be seen from the attribution of these relative weights in Fig. 2b.

The sender, e.g. an operator, may thus already prioritize some image components based on their directional normalized frequencies fx and fy, which may have a distribution, dependent on the content, as shown in Figs. 2a-b. These are the input values oca as depicted in Figs. 1a-b.

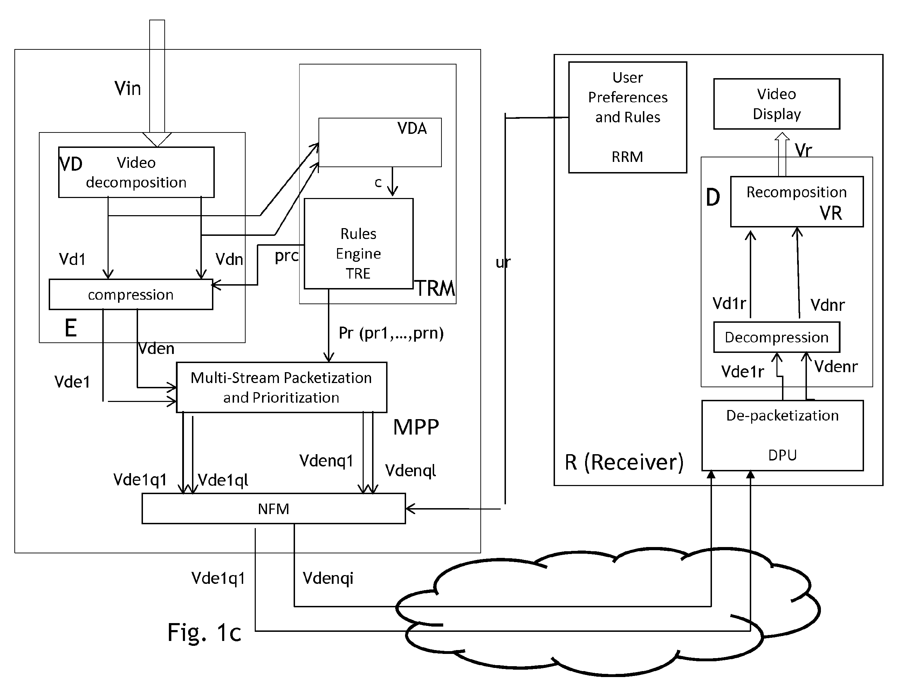

In another embodiment such as the one depicted in Fig. 1c, no input parameters are provided as input signals oca, but some intermediate weights, denoted c on Fig. 1c, are calculated in a module VDA, by computing the average amplitude of the spectral components , possibly after applying a de-noising filter like a well-known median filter, and to linearly set the component importance weight according to its average amplitude. Other statistics can be computed in order to privilege amplitude peaks that can be seen as peaks of information in the spectrum rather than general noise amplitude of the coefficients. One approach in order to refine the sum of coefficient amplitudes could be to only account for components residing into peaks, by ordering coefficients following their amplitude, and then compute the difference between the maximum of the amplitude in the component and the average of 50 percent of all ordered components starting from the minimum amplitude. Other approaches based on two thresholds and connected transform components can be taken as well in order to better select also non-maximum peaks inside of a component.

In another embodiment, not shown on the figures, VDA may as well receive input values for the weights from e.g. an operator during an initialization process, and take this information together with the analysis of the spectral components Vd1 to Vdn to generate the intermediate weights c for provision to a rules engine module TRE. The latter will further process this information into a set of encoding-related parameters, for provision to the encoding module E, thereby enabling to compress the different components separately. In an embodiment the rules engine module TRE is adapted to derive quantization parameters, abbreviated by QP, from these oca, and/or intermediate weight parameters c. In an embodiment high QPs can be attributed to low importance components, thus for which the weights as given by oca are low, and low QPs (high quality) for important components, thus for which the weights of oca are low. Numerical examples in the case of a Fourier Transform, may attribute a low QP typically below 15 for H.264/AVC, as small modifications already impair the reconstruction, to components with high peaks, as shown in Figs. 2a-b. For non high-amplitude components which are generally corresponding to noise, quantization can be set higher at for example a QP equal to 32 or 36.

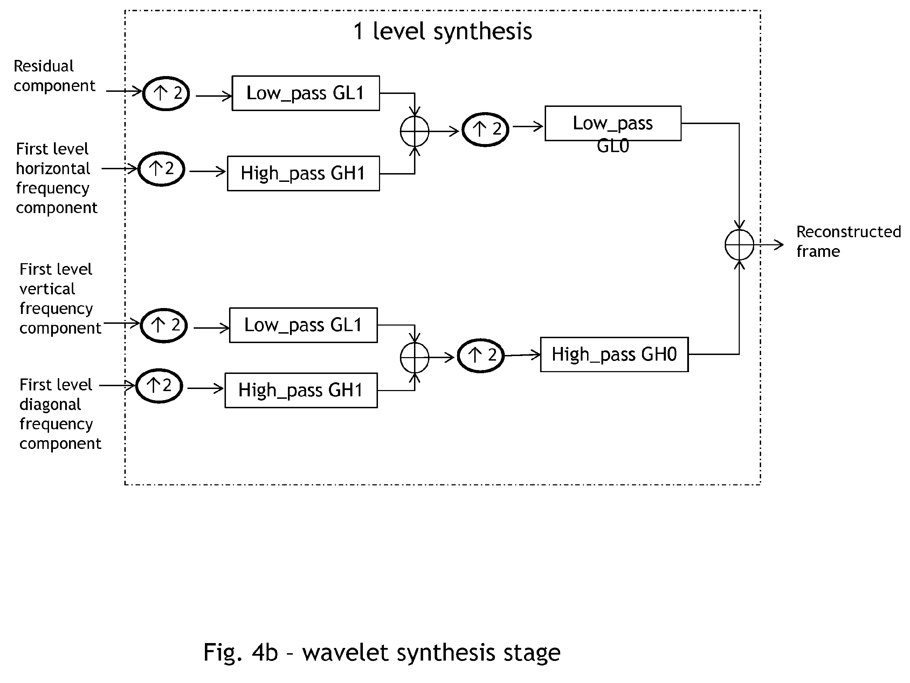

For embodiments where the decomposition process is based on wavelet decomposition, which will be described in conjunction with Fig. 4 the QP could be set higher, around 24 for H.264/AVC for transform components whose amplitude is higher than the average on a particular band. When the transform component's amplitude is close to zero, they can be quantized much more aggressively. Similarly for higher frequency bands, the quantization parameter can be set higher around 32 or 36 as their impact on perceived quality is lower. As some components may be complex, or contain amplitude and phase information, the real and imaginary parts are then to be encoded separately as real numbers.

This set of QP values for the different decomposed videos, is provided to the compression module of the encoder as control signal prc.

Other parameters such as target bitrates, segment length, and a specific packet priority will also be calculated by TRE, and next be provided to a Packetization and prioritization module MPP of the transmitter, under form of priority parameters Pr for the respective components.

Target bitrates can be e.g. be computed by using a linear sharing of a given target bit rate, determined by the operator , for all components given their importance, which importance is again reflected by the weights.

All these parameters calculated by TRM and provided to MPP are denoted Pr in fig. 1a. In Fig. 1a Pr is depicted as comprising a set of parameters, one for each compressed decomposed stream.

These parameters Pr , prc and oca may also be further adapted during operation, starting from some default parameters, depending on the chosen decomposition.

In Fig. 1a and 1c the separate compressed sub-streams are denoted Vde1 to Vden. These are further provided to the multi-stream packetization and prioritization module MPP of T, for being used for generation of l different quality versions q1 ti ql, in accordance to the production rules Pr provided by the rule engine module. Thus for Vd1, a set of l transport files comprising packets, each transport file comprising segments of the compressed video file Vde1. These l transport files are denoted Vde1q1 - Vde1ql. For Vden another set of l transport files containing compressed video file Vden are generated, these are denoted Vdn1 to Vdnl etc.. Generation of these transport files takes place using standard procedures , and after generation they may be temporarily stored in the transmitter, e.g. in a memory module of MPP , or in a separate memory, denoted NFM in Figs. 1a-c.

The generation of the different versions and the packetizing of all of them thus takes place in module MPP. This module receives control parameters from TRM, which are denoted Pr, and which may thus comprise a set of l values of frame rate, segments length or a combination of both, per decomposed video file. The sub-set pr1 for Vde1 can be different from the sub-set prn for Vden .

In this way lxn different packetized or transport video streams are generated and stored in a memory NFM in the transmitter. Upon receiving a request from the receiver, denoted ur, a set of possibly different quality versions of two or more of the components are be provided to the receiver. This means that the receiver is knowledgeable about the number of different quality versions. This information was communicated to the receiver by signaling from the transmitter (not shown on the figures). The user may thus request a particular quality version of each component, depending on the bandwidth (which the user has to determine) between transmitter and receiver, user preferences (high quality or low quality, e.g. depending on display ), content type (e.g. like for sports, users prefer HD resolution at 60 frames per second rather than 4K resolution at 30 frames; similarly components qualities can be requested in order to better reconstruct e.g. HD at 60fps), or complexity of the reconstruction to e.g. save battery or improve fluidity of the display on mobile devices (selecting lower qualities enables to perform less reconstruction operations in all embodiments) etc.

The parameters used for generating the different versions are denoted priority parameters pr and may thus comprise a set of n or more parameter values, one for each component , and are generated in the rules engine module TRE, taking into account the respective weights oca and/or c. In an example the relative importance of the component in the total amplitude of the spectrum, as already attributed or determined by the weight, can also result in a relative high priority value, e.g. high priority is 1 and low priority is 3 on a scale of one to 3 . Similarly, although QP or target bitrates are already set in the encoder, it could be that, if variable bit rate transport schemes are used, that ,like for AVC streams for videos, some components require providing enough resources to possibly anticipate a peak of bit rate as they come with high details that require high quality. The occurrence of these peaks can be flagged together with the priority to inform the decoder that this component might require more buffering or higher delay. Methods for indicating this can be by setting a special bit or flag e.g. in the header of the packets of the transport stream, similar to the indication of the priority itself. The receiver and other network elements in the network of course have to be knowledgeable of this packet header structure.

In case of a flag indicating extra buffering, this can e.g. be understood by the receiver by instructing a receiver or de-packetizing buffer , to either reserve some extra space for buffering some consecutive encoded frames when possible (possible if it is software, not always possible if it is hardware), before providing them to the decompression unit of the decoder, or instructing to switch to a lower quality level that better suits the receiver or de-packetizing buffer size.

In this way a content provider, is capable of providing a plurality of different qualities which may e.g. vary for receiver type (e.g. mobile phone or HD TV and any variations in between), for connection type , network condition and combinations of them

The memory module NFM will thus store all these encoded versions, and select for a user R, a set of n encoded versions. So it is possible select Vde1q2, Vde2ql,Vde3q2,...vdenq1, based on the ur parameter the user provides. The user is to check the network conditions and is knowledgeable about his type of receiver, so can adjust ur such as to always receive an optimal quality taking into account his settings and the current network conditions. The user preferences are provided by each user, as depicted by the signal or message upr, from a preferences and rules module RRM in the receiver R, to the NFM.

For instance, If the user wants to reconstruct a video at 4K resolution at full quality, the client will ask and download all components in their version with priority 1. In case the user rather wants a reconstruction in HD resolution because of a lower bandwidth or a TV set that is not 4K compatible, the client will select low frequency priority 1 components and high frequency priority 2 components. In case the user uses a mobile and only wishes a minimal resolution with lowest priority, the client might only ask and download the priority 3 low frequency components.

Via this mechanism a highly adaptive and fine-tuned selection of video encoding based on the video content and taking into account observed network conditions is possible.

Upon having received the request from the receiver comprising the requested components in a requested quality, NFM thus selects the appropriate encoded versions and transmits them further to R via the network. Within the receiver a de-packetization unit DPU unpacks the stream into its set of received streams Vde1r to Vdenr. These are provided to a decoder D which first decompresses them into Vd1r to Vdnr, after which steps they undergo a re-composition.

In Fig 1a an example is shown where the user has requested Vde1q1, thus the highest quality q1 of component 1, and Vdenqi, thus quality qi for component n. Remark that this may only represent a fictitious example, for explanatory reasons.

These files are further provided over the network to the receiver R, which first may temporarily store them in a receiver or de-packetization buffer (not shown on the figures) if needed, which de-packetization buffer may be part of the de-packetization unit DPU.

After de-packetization by DPU, received packets of encoded received stream Vde1r and Vdenr, are provided to the decoder D of the receiver. Therein a decompression first take place; resulting exemplary components being denoted Vd1r and Vdnr. These are next provided to a re-composition unit VR, which is adapted to generate again a received video file Vr which may be provided to a display.

Such re-composition in VR can be done by simply reconstructing the decoded components on their specific location in the video. It can also include specific post-filters that enable to smooth transitions between regions of the video that were reconstructed from different components at different qualities. We detail possible decompositions in the embodiments.

Fig. 1b depicts an embodiment which is very similar to these of fig. 1a; the only difference is that, before being compressed a partitioning takes place for grouping frame components into blocks. This may help to localize components via grouping or partitioning. This partitioning can be regular because the chosen decomposition has a maximal size (e.g. wavelets are usually not applied on larger regions than 256x256 pixels for complexity reasons), or it can also be made adaptive by creating larger regions in uniform areas and smaller regions in detailed areas like the quad-tree decomposition in blocks of the HEVC standard for example

Partitioned components belonging in the same group or partition are treated together similarly (e.g. grouping all spatial parts of the frame belonging to a person in one group, and grouping the background in another group). It may be realized by a simple tiling of the input image that can be done after or before the decomposition, esp in case of wavelet decomposition, and that could be done before when selecting Fourier or filter banks. However, you can also do it after in all cases.

In this case the operator knows about the partitioning procedure, and can provide parameters that take this already into account.

The receiver of Fig 1b is similar to that of Fig. 1a, only a re-partitioning takes place.

In the embodiment of Fig. 1c, TRM comprises a video analysis module VA which receives the decomposed video set Vd1 to Vdn. This Video Analysis module takes as input the components generated by the video decomposition module and optionally the input video frames directly (not shown in Fig. 1c). In order to assess the relative importance of each component, the video analysis module may perform some energy estimations as follows, noting the components $Vd_1$ to $Vd_n$:

$$\text{Importance of component } vd_i \ = \ \frac{\sum vd_i[x]^2}{\sum_k \sum vd_k[x]^2}$$

Additional information can further be used during the relative importance estimation, e.g. by analyzing the video frames input, identifying objects of interests and their textures or contours and estimating which components contribute the most to their high quality reconstruction. To this end one possible approach is to reconstruct the image or video frames with only one component and compare the reconstructed image for one component and the original frame on the locations of the detected objects and contours.

Based on this analysis again a set of parameters, represented by signal c in fig. 1c, are generated, indicating the relative importance of each decomposed component, and these parameters are then further optionally combined with operator parameters ,to generate the final quantization parameters or other parameters to be provided to the encoder E .

Fig. 3a depicts a first example of a decomposition module VD and associate re-composition module VR in the receiver R. An input video frame of the video stream Vin is provided to a filter bank , composed of N filters denoted $H_0(f)$ to $H_{N-1}(f)$. The different filters are preferably non-overlapping , thus generating N preferably non-overlapping sub-bands, which are in a next stage downsampled by a factor N without aliasing distortion. In Fig.3a the N downsampling modules are all depicted in the same way by means of the ellipses with inside the arrow down and the factor N, indicating it concerns a down sampling operation by a factor N. At the receiver side an up-sampling with the same factor takes place, and the N up-sampling modules are all denoted the same, within the ellipses with inside an arrow up, followed by N.

An example of such filters are e.g. quadratic mirror filters. Such filters are designed to generate uniformly distributed sub-bands capturing a frequential sub-band from low frequencies to high frequencies. The advantage of such approach is that the human eye is much more sensitive to the low frequencies but also requires sharp details in specific areas of the video frames. A filter bank enables to both decompose frequencies, and these can later be encoded separately using standard video encoding techniques such as H.264 or H.265.

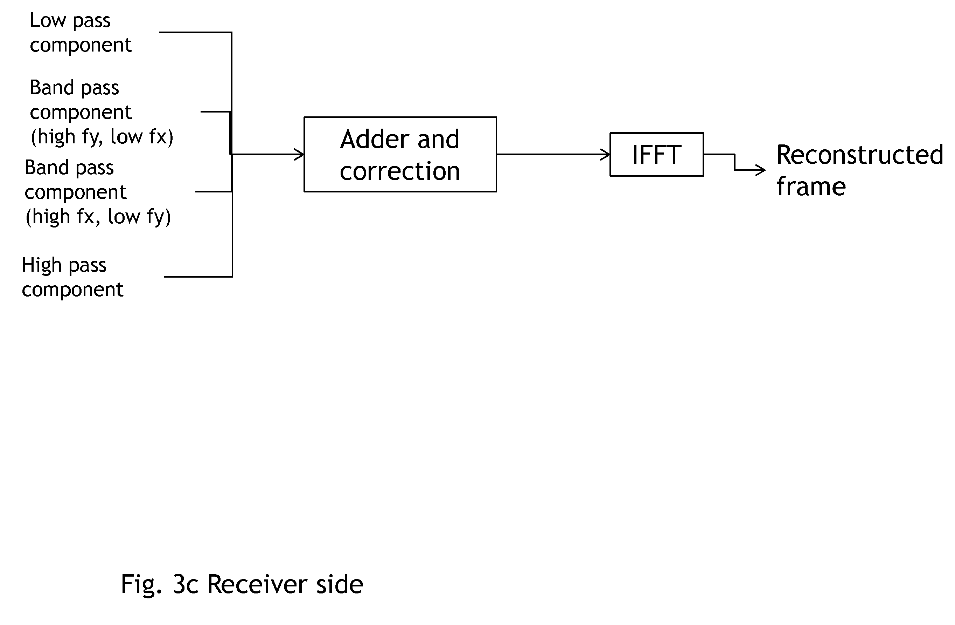

The filter bank at the sender side is usually referred to as analysis filters and those at the receive side, are then denoted synthesis filters. On Fig. 3 the analysis filters are thus noted $H_0(f)$, $H_1(f)$,... $H_i(f)$, $H_{i+1}(f)$,... $H_{N-1}(f)$ and the synthesis filters at the receiver side are denoted $G_0(f)$, $G_1(f)$,... $G_i(f)$, $G_{i+1}(f)$,... $G_{N-1}(f)$).

The analysis filters and also the synthesis can thus be implemented for example as Quadratic Mirror Filters as detailed in Girod, B., Hartung, F., & Horn, U. (1996). Subband image coding. In Subband and Wavelet Transforms (pp. 213-250). Springer US. , but any other choice of Quadratic Mirror Filters can be selected as long as it prevents aliasing distortions. It is also possible to use machine learning to define the filters of the filter banks in order to specialize such filters for detection and separation of specific textures in the images. These techniques are e.g. described by Sainath, T. N., Kingsbury, B., Mohamed, A. R., & Ramabhadran, B. (2013, December). "Learning filter banks within a deep neural network framework", Automatic Speech Recognition and Understanding (ASRU), 2013 IEEE Workshop on (pp. 297-302). IEEE., and Rigamonti, R., Sironi, A., Lepetit, V., & Fua, P. (2013, June). "Learning separable filters", Computer Vision and Pattern Recognition (CVPR), 2013 IEEE Conference on (pp. 2754-2761), IEEE.

The filtered frames generated by the filterbank are obtained as follows:

$$\tilde{f}_i(n,m) = \sum_{l,k} h_i(l,k) f\big((n-l),(m-k)\big)$$

$$f_i(n,m) = \tilde{f}_i(Nn,Nm)$$

With n,m being pixels

The reconstruction of the frames are obtained similarly:

$$f(n,m) = \sum \bar{f}_i(n/N,m/N)$$

$$\bar{\tilde{f}}_i(n,m) = \sum_{l,k} g_i(l,k) f_i\big((n-l),(m-k)\big)$$

The N output sub-sampled frames $f_i$ that are thus generated by the analysis filter bank can be partitioned, such as in Fig. 1 and further compressed using e.g. H.264 or H.265 encoders.

At the receiver side, an up-sampling step and a mirror filter bank must be applied to reconstruct the video frames.

Note that in other embodiments the down- and upsampling steps are not present.

In another embodiment, as depicted on Fig 3b, the input video frames are first decomposed into their 2D spectra or their 3D spectra (temporal and spatial Fourier transform). This can be performed by the use of FFT or 3D-FFT on each color channel (for example RGB, YUV, LAB, HSV or other color spaces), respectively. Furthermore, the FFT can be applied on the whole frame or on blocks of pixels for each frame, but also to different tiles of the frame at different resolutions in order to introduce spatial locality to the transform.

The spectral resolution is equal to the resolution of the block of pixels the FFT is applied to. The values of such spectra are complex and typically in floating point precision. The advantage of spectral decomposition for natural video signals (that is excepting parasites and white noise signals) is that most of the signal energy is compacted into the spectral low frequencies, while signal energy quickly decreases when frequency increases. Another aspect of the Fourier transform of real video signals is that their spectrum has well-known symmetry properties, which make it a robust representation.

For the associated receiver module VR, depicted in Fig. 3b, an adder and correction module is added to check the sum of the components , and to correct the resulting signal if needed. This symmetry is needed to recover a real , thus not complex, reconstructed frame after the inverse Fast Fourier Transform, abbreviated by IFFT. Asymmetry could indeed occur at the stage of adding the respective components due to compression artifacts. This asymmetry is to be kept small such that a correction is sometimes needed. More specifically the correction is needed if the added spectrum S(fx,fy) is not the same as the added spectrum for -fx,-fy, which is denoted by S(-fx,-fy). For this situation S(-fx,-fy) is to be overwritten and set equal to S(fx,fy).

Fig. 4a shows still another embodiment of VD, in this case based on a wavelet decomposition.

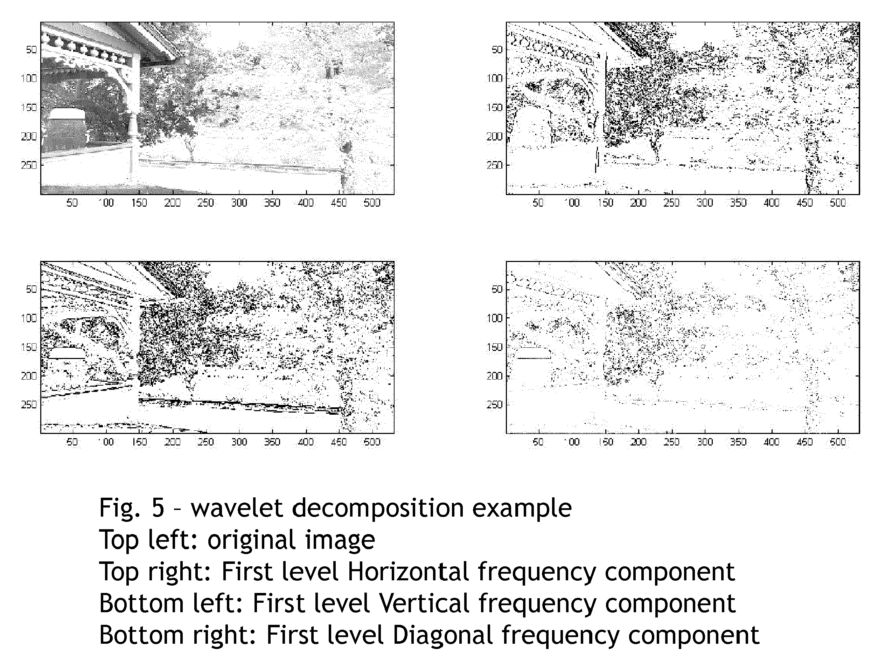

The decomposition here based on a multi-resolution wavelet transform can for example be based on the Discrete Wavelet Transform (DWT) as used in standards like JPEG2000, but other choices of wavelets (actually the choice of the wavelet basis function) are possible in order to provide more sensitivity to directivity of video content features. Similarly to the embodiment based on the spectral decomposition, components show peaks of energy or information but now localized on the pixel areas they relate to, while Fourier transform peaks are rather localized in low frequencies. Another slight difference is that the wavelet decomposition can be applied recursively into different levels, each yielding frequency components relating to another resolution. These various components computed by the wavelet decomposition can be called wavelet bands, with typically a horizontal, a vertical and a diagonal wavelet band ( also called sub-band when different resolutions or levels are computed). Examples of how these wavelet bands map to the real image are represented on Fig 5.

As for spectral decompositions, each wavelet band can be subdivided and partitioned into different components. Video energy distribution is now local in both spatial and spectral dimensions, and the amplitude of the coefficients represent the importance of a given wavelet basis in the video signal representation. Partitioning can be done regularly in the wavelet domain by subdividing regularly the wavelet bands. The importance of such wavelet coefficients in the quality of the reconstruction is proportional to the square of the coefficient amplitude. The compression of wavelet coefficients can be done in a scalable manner by using quantization, bitplane representation and entropy coding like e.g. in JPEG2000, however AVC could also be used to encode the wavelet bands as regular video frames. Similarly to the Spectral decomposition embodiment, wavelets can also be applied on the temporal dimension as well, leading to 3D wavelet decompositions.

Components generated by the decomposition and partitioning can now receive a priority that depends on first the resolution of the wavelet decomposition and secondly on the energy of the wavelet component.

An embodiment for the reconstruction for wavelet-based decomposition is shown in Fig. 4b.

In the claims hereof any element expressed as a means for performing a specified function is intended to encompass any way of performing that function. This may include, for example, a) a combination of electrical or mechanical elements which performs that function or b) software in any form, including, therefore, firmware, microcode or the like, combined with appropriate circuitry for executing that software to perform the function, as well as mechanical elements coupled to software controlled circuitry, if any. The invention as defined by such claims resides in the fact that the functionalities provided by the various recited means are combined and brought together in the manner which the claims call for, and unless otherwise specifically so defined, any physical structure is of little or no importance to the novelty of the claimed invention. Applicant thus regards any means which can provide those functionalities as equivalent as those shown herein.

While the principles of the invention have been described above in connection with specific apparatus, it is to be clearly understood that this description is made only by way of example and not as a limitation on the scope of the invention, as defined in the appended claims.

## Claims

1. Transmitter for generating a set of encoded prioritized video streams from an incoming video stream (Vin), said transmitter comprising :

  - a video decomposition module (VD) for decomposing said incoming video stream in at least two independent video components in spectral or time-spatial/spectral domain (Vd1,...,Vdn),
  - a compression module for compressing said at least two independent video components, thereby obtaining at least two compressed independent video components (Vde1,...,Vden),
  - a multi-stream packetization and prioritization module (MPP) for generating for each of said at least two compressed independent video components a respective set of packet streams in respective different qualities (Vde1q1, .., Vde1ql, ..., Vdenq1, ..., Vdenql),
  - a transmission rule engine (TRE) for determining and provision of respective compression parameters (prc) to be applied to the respective independent video components in said compression module , and for determining and provision of respective priority parameters (Pr) to said multi-stream packetization and prioritization module.

2. Transmitter according to claim 1 wherein said video decomposition module (VD) comprises a filter bank of N analysis filters, for performing respective filtering operations on said incoming video stream, thereby obtaining a set of N independent video components.

3. Transmitter according to claim 1 wherein said video decomposition module (VD) is adapted to perform a fast Fourier transform operation on said incoming video stream, followed by at least two low pass filtering operations in the respective frame directions.

4. Transmitter (T) according to claim 1 wherein said video decomposition module (VD) is adapted to perform a wavelet transform operation on said incoming video stream.

5. Transmitter (T) according to claim 1 wherein said transmission rule engine (TRE) is adapted to determine said compression parameters and said respective priority parameters, based on knowledge of said decomposition process and on the contents of said incoming video stream.

6. Transmitter (T) according to claim 5 wherein said transmission rule engine (TRE) is further adapted to receive said at least two independent video components from said video decomposition module (VD), to analyze said at least two independent video components and to further determine said compression parameters and said respective priority parameters based on said analysis.

7. Transmitter according to any of the previous claims 1-6 wherein said compression parameter is a quantization parameter.

8. Transmitter according to any of the previous claims 1-7 further being adapted to send a signaling message to a receiver coupled to said transmitter, said signaling message containing information about said decomposition used by said transmitter and the respective qualities in which said respective set of packet streams are generated.

9. Receiver (R) adapted to request at least two compressed independent video components, each of them in a respective requested quality (Vdeq1,Vdnqi), from a transmitter (T), said receiver further being adapted to

- de-packetize said at least two compressed independent components, thereby obtaining at least two received compressed independent components,
- decompress said at least two received compressed independent components, thereby obtaining at least two received independent components (Vdlr, Vdnr),
- reconstruct said video stream from said at least two received independent components by performing a re-composition operation on said at least two received independent components.

10. Receiver according to claim 9 wherein said re-composition operation comprises performing a set of synthesis filter operations.

11. Receiver according to claim 9 wherein said re-composition operation comprises performing an inverse Fourier transform operation.

12. Receiver according to claim 9 wherein said re-composition operation comprises performing an inverse wavelet transform operation.

13. Receiver according to any of the previous claims 9-12 further being adapted to receive from said transmitter a signaling message informing said receiver on a video decomposition operation performed in said transmitter, such that said receiver is adapted to perform an inverse re-composition operation.

oca

Vin

User Preferences and Rules

RRM

Video Display

M

VD    Video decomposition

Vd1        Vdn

oca

Recomposition VR

D

Vr

Rules Engine TRE

prc

TRM

compression

E

Vden

Vr

Vd1r        Vdnr

Pr (pr1,...,prn)

Decompression

Vde1r        Vdenr

Vde1

Multi-Stream Packetization and Prioritization

MPP

ur

De-packetization DPU

R (Receiver)

Vde1q1    Vde1ql                    Vdenql

NFM

Vdenqi

Vde1q1

Fig. 1a

Fig. 1b

Fig. 1c

Normalized energy content

Example 1 : video or image with low frequency natural content, does not exhibit high frequencies

Normalized frequency

0    0.2    0.4    0.6    0.8    1.0

Weights:   0.6, 0.3, 0.1, 0, 0

Fig. 2a

Normalized energy content

Example 2 : video with higher motion or more detailed content, contains balanced medium
and high frequencies as well

0        0.2        0.4        0.6        0.8        1.0

Normalized frequency

Weights:    0.6, 0.2, 0.15, 0.08, 0.07

Fig. 2b

Fig. 3a Filter banks

Fig. 3b

EP 3 185 554 A1

Fig. 3c Receiver side

## 1 level decomposition

frame

Low_pass HL0 → ↓2

High_pass HH0 → ↓2

Low_pass HL1 → ↓2 → Residual to next decomposition level

High_pass HH1 → ↓2 → First level horizontal frequency component

Low_pass HL1 → ↓2 → First level vertical frequency component

High_pass HH1 → ↓2 → First level diagonal frequency component

2nd level decomposition → Residual to next decomposition level →   ...

→
→    2nd level hor, vert, diag frequency
→    components

Fig. 4a – wavelet decomposition embodiment

EP 3 185 554 A1

Fig. 4b – wavelet synthesis stage

EP 3 185 554 A1

Fig. 5 – wavelet decomposition example
Top left: original image
Top right: First level Horizontal frequency component
Bottom left: First level Vertical frequency component
Bottom right: First level Diagonal frequency component

Europäisches
Patentamt

European
Patent Office

Office européen
des brevets

**EUROPEAN SEARCH REPORT**

Application Number

EP 15 30 7068

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAUBMAN D ET AL: "MULTIRATE 3-D SUBBAND CODING OF VIDEO", IEEE TRANSACTIONS ON IMAGE PROCESSING, IEEE SERVICE CENTER, PISCATAWAY, NJ, US, vol. 3, no. 5, 1 September 1994 (1994-09-01), pages 572-588, XP000476833, ISSN: 1057-7149, DOI: 10.1109/83.334984 | 1,2,5,9,10 | INV. H04N19/124 H04N19/14 H04N19/18 H04N19/63 H04N19/37 |
| Y | * section II * * section II-A * * section III * ----- | 3,4,6-8, 11-13 | |
| Y | WO 00/49571 A2 (DIGITAL ACCELERATOR CORP [CA]; WANG MENG [CA]; YANG XUE DONG [CA]; SIM) 24 August 2000 (2000-08-24) * page 9, line 5 - line 18 * * page 15, line 1 - line 5 * ----- | 3,4,7,8, 11-13 | |
| Y | EP 0 555 016 A2 (AMERICAN TELEPHONE & TELEGRAPH [US]) 11 August 1993 (1993-08-11) * figure 1 * ----- | 6-8,13 | |
| A | US 2008/137738 A1 (FERNANDES FELIX C [US]) 12 June 2008 (2008-06-12) * the whole document * ----- | 1-13 | |

TECHNICAL FIELDS
SEARCHED (IPC)

H04N

The present search report has been drawn up for all claims

| Place of search | Date of completion of the search | Examiner |
|---|---|---|
| Munich | 6 April 2016 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

         

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 7068

This annex lists the patent family members relating to the patent documents cited in the above-mentioned European search report.
The members are as contained in the European Patent Office EDP file on
The European Patent Office is in no way liable for these particulars which are merely given for the purpose of information.

06-04-2016

| Patent document cited in search report | | Publication date | Patent family member(s) | | Publication date |
|---|---|---|---|---|---|
| WO 0049571 | A2 | 24-08-2000 | AU | 2529900 A | 04-09-2000 |
| | | | CA | 2261833 A1 | 15-08-2000 |
| | | | WO | 0049571 A2 | 24-08-2000 |
| EP 0555016 | A2 | 11-08-1993 | CA | 2088082 A1 | 08-08-1993 |
| | | | DE | 69322531 D1 | 28-01-1999 |
| | | | DE | 69322531 T2 | 24-06-1999 |
| | | | EP | 0555016 A2 | 11-08-1993 |
| | | | JP | 2915238 B2 | 05-07-1999 |
| | | | JP | H0646403 A | 18-02-1994 |
| | | | US | 5309232 A | 03-05-1994 |
| | | | US | 5481308 A | 02-01-1996 |
| US 2008137738 | A1 | 12-06-2008 | CN | 101755464 A | 23-06-2010 |
| | | | EP | 2103147 A2 | 23-09-2009 |
| | | | JP | 5221557 B2 | 26-06-2013 |
| | | | JP | 5425865 B2 | 26-02-2014 |
| | | | JP | 2010512692 A | 22-04-2010 |
| | | | JP | 2012085313 A | 26-04-2012 |
| | | | KR | 20090096516 A | 10-09-2009 |
| | | | US | 2008137737 A1 | 12-06-2008 |
| | | | US | 2008137738 A1 | 12-06-2008 |
| | | | WO | 2008070843 A2 | 12-06-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Subband image coding. **GIROD, B. ; HARTUNG, F. ; HORN, U.** Subband and Wavelet Transforms. Springer, 1996, 213-250
- Learning filter banks within a deep neural network framework. **SAINATH, T. N. ; KINGSBURY, B. ; MOHAMED, A. R. ; RAMABHADRAN, B.** Automatic Speech Recognition and Understanding (ASRU), 2013. IEEE Workshop, December 2013, 297-302
- Learning separable filters. **RIGAMONTI, R. ; SIRONI, A. ; LEPETIT, V. ; FUA, P.** Computer Vision and Pattern Recognition (CVPR), 2013 IEEE Conference. IEEE, June 2013, 2754-2761